(19) **Europäisches Patentamt** / **European Patent Office** / **Office européen des brevets**

(11) **EP 1 746 784 A1**

(12) **EUROPEAN PATENT APPLICATION**

(43) Date of publication:
**24.01.2007 Bulletin 2007/04**

(51) Int Cl.:
***H04L 12/437*** (2006.01)

(21) Application number: **05015994.6**

(22) Date of filing: **22.07.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (71) Applicant: **SIEMENS AKTIENGESELLSCHAFT**<br>**80333 München (DE)**<br><br>(72) Inventor: **Ramalho Ribeiro dos Santos, José Miguel**<br>**1170-329 Lisboa (PT)** |

(54) **Ethernet ring protection-resource usage optimisation methods**

(57) Reconfiguring a ring network having N nodes and S spans that prevents a maximum usage parameter to be exceeded. The network is configured by selecting a span as a protection span to remain idle. An effect of the configuration on the network that causes the network to exceed a maximum usage parameter is calculated.

The network is reconfigured by selecting a different span as a protection span to remain idle based on a result of the step of calculating that a previous span selected as the protection span to remain idle causes the network to exceed a maximum usage parameter such that the maximum usage parameter of the reconfigured network is not exceeded.

FIG 6

```
                    ┌─────────┐
                    │  Begin  │
                    └─────────┘
                         │
   ┌─────────────────────────────────────────────┐
   │              For each VLAN                    │─── 602
   └─────────────────────────────────────────────┘
         │              │              │
   ┌───────────┐        │        ┌───────────┐
604│ Minimise  │      . . .      │ Minimise  │
   │   Ring    │                 │   Ring    │
   │ Bandwidth │                 │ Bandwidth │
   │   usage   │                 │   usage   │
   └───────────┘                 └───────────┘
         │              │              │
   ┌─────────────────────────────────────────────┐
   │    Sort Ring Bandwidth usage using all VLANs │─── 606
   └─────────────────────────────────────────────┘
                         │
                         │        ┌──────────────────┐
                         │        │ Goto next        │─── 610
                         │        │ minimised        │
                         │        │ Ring Bandwidth   │
                         │        └──────────────────┘
              608                          │
                   ╱─────────────────╲     │
                  ╱   Does Span        ╲    │
                 ╱  bandwidth accomplish ╲  n
                 ╲    bandwidth          ╱──┘
                  ╲  requirements?      ╱
                   ╲─────────────────╱
                         │ y
   ┌─────────────────────────────────────────────┐
   │   Aggregate all VLANs using the              │─── 612
   │   same protecting span in a Domain           │
   └─────────────────────────────────────────────┘
                         │
   ┌─────────────────────────────────────────────┐
   │   Ring Bandwidth Optimised                   │─── 614
   │   according to span requirements             │
   └─────────────────────────────────────────────┘
                         │
                    ┌─────────┐
                    │   End   │
                    └─────────┘
```

Creating domains with optimised ring

EP 1 746 784 A1

**Description**

The present invention relates to the field of telecommunications and, more specifically, to a method and apparatus for configuring and protecting a ring network.

Data communication is the process by which two or more data terminals or peripherals send information to each other. In its simplest form, a data communication system, or network, is comprised of a transmitter, a transmission path, and a receiver.

A typical network communication involves computers and peripherals, or terminals or end devices, such as a telephone, that are connected in a LAN by a mesh, ring topology, as well as other topologies. Different LAN systems are then connected in a larger network, like a WAN, using a ring topology. Often, the internetwork link is called a backbone, a very high data-rate link. A virtual (or logical) LAN is a local area network with a definition that maps workstations on a logical basis, rather than geographic location.

Frame relay networks are digital networks in which different logical connections share the same physical path and some logical connections are given higher bandwidths than others. For example, a connection conveying a high proportion of video signals (which require a high bandwidth) could be set up for certain workstations in a company (or on a larger network) and other connections requiring less bandwidth could be set up for all other workstations. In frame relay networks, a committed information rate (CIR) is a bandwidth (expressed in bits per second) associated with a logical connection in a permanent virtual circuit (PVC). The Peak Information Rate (PIR) designates an upper limit that the traffic information rate may not exceed.

In configuring a network, a number of considerations arise. For one thing, the network has a maximum overall bandwidth that it can support. Indeed, individual links, or spans, in the network may be only able to support a certain bandwidth. Perhaps more importantly, it should be considered that, should a link of the network should fail, the network may need to be reconfigured and that these reconfigurations may overburden the network or individual span bandwidth.

In order to account for these considerations, various ring protections schemes have been proposed. In one type of Ring Protection mechanism, a span is reserved by using all less one of the available spans in the ring. In the event, that a span fails, the reserved span is employed to handle part of the traffic burden from the failed span. Examples of such ring protection schemes include EAPS from Extreme Networks, ERP-Ethernet Ring Protection from Siemens™ and ring protection mechanisms based on a redundancy manager, such as disclosed in US patent 6430151B1.

The cited references may possibly be utilized for configuring a network. One problem is that the previous solutions would only be able to configure a single set of VLANs (domain). In the same physical ring, there may, and often does, coexist several logical domains. The problem is the optimisation of the ring configurations in order to improve the available bandwidth in the ring and know the effects of failures.

Another problem is the configuration changes or failures that may occur in the network.

Specifically, the optimising method described in US2003/0023706A1 does not concern configuration optimisation but only to network design. Methods of flow control as referred to in US6195332B1 are applied for determining the flow of packets in a ring and not for determining redundancy manager configuration (where the only available path in preconfigured), as EAPS from Extreme Networks and ERP from Siemens require. Previous IR 2004E11743 PT only focuses on a single domain and do not refer to multi-domain environment.

It should be clear that the previous attempts at ring protection have proven to be inadequate. The goal of ring protection should be to optimise ring configurations, e.g., locations and configurations of the redundancy manager, to improve the available bandwidth in the ring and to know the effects of the configurations impacts, namely configuration changes or failures may have in the network. In terms of configuring a network, there is needed a method to verify the required infrastructure to assure full ring resilience committed to the several domains specific requests. Such a solution should also determine how domains should be set (witch VLAN should belong to each domain) accomplishing, for one thing, a lowest ring overall bandwidth usage as possible and the bandwidth requirements for each span.

An object of the invention is to minimize bandwidth useage of a span.

Another object of the invention is to minimize overall bandwidth useage of the network.

An object of the invention is to find the span that should be used just for protection of the ring assuring lowest ring overall bandwidth usage as possible.

Another object of the invention is to verify the required infrastructure to assure full ring resilience.

Another object of the invention is to find the span that should be used just for protection of the ring assuring to minimise the maximum bandwidth of an active span.

According to the above objects, a method and system is provided for reconfiguring a network having N nodes and S spans that prevents a maximum usage parameter to be exceeded. The network is configured by selecting a span as a protection span to remain idle. An effect of the configuration on the network that causes the network to exceed a maximum usage parameter is calculated. The network is reconfigured by selecting a different span as a protection span to remain idle based on a result of the step of calculating that a previous span selected as the protection span to remain idle causes the network to exceed a maximum usage parameter such that the maximum usage parameter of the reconfigured network is not exceeded.

The present invention applies, in general, to telecommunications and more particularly, to Ethernet Networks, for example those used in Access. The invention may be applicable to telephony, particularly VoIP (Voice Over IP).

The invention shall now be described beginning with an understanding of the ring network and defining its characteristics. Consider a ring with N nodes:

$N \rightarrow$ Number of Nodes

Nodes will be identified with a unique number, and represented by a character in lowercase. The set of nodes in the ring will be:

$$R = \{1, 2, \ldots, n-1, n, n+1, \ldots, N-1, N\}$$

The ring will have N spans. Each span will be represented by:

$s_{(n-1,n)} \rightarrow$ Span Between nodes $n$-1 and $n$

There will be communications flowing from two adjacent nodes.

$t_{(n-1,n)} \rightarrow$ Traffic in the Span $s_{(n-1,n)}$

In a scenario where each node communicates with all the others, such as in a many-to-many configuration, there will also exist traffic between all nodes.

$t_{(a,b)} \rightarrow$ Traffic between nodes $a$ and $b$

As all communications in this example are considered to be full duplex we will not trouble ourselves with the order of the nodes and the order becomes irrelevant for the purpose of this description. What is considered here is the overall used bandwidth in communications between two nodes.

$$t_{(a,b)} = t_{(b,a)}$$

It should be clear that communications between the same node does not have an effect on the ring. This is represented here as:

$$t_{(a,a)} = 0$$

In a Ring with N nodes there are N spans where the traffic may flow, and $N$-1 will be active in a ring span protection scheme. The logical traffic communications flow may be depicted as a complete graphic.

$K_N \rightarrow$ Complete Graph with $N$ nodes

This graph is a logical network with ($N$-1)! possible communications. Each communication between two or more nodes has an expected traffic bandwidth usage. The optimisation of communications in a ring is to transform a $K_N$ complete graph with ($N$-1) active paths in a ring with just ($N$-1) active paths.

We turn now to the problem of optimising the usage of the ring bandwidth. The goal is to find the span that should be used just for protection of the ring assuring lowest ring bandwidth usage as possible. A common sense approach would lead to the conclusion that the span that should be selected as idle should be the one between the nodes with less traffic, i.e., used bandwidth. But this is an approach that may not optimise ring traffic bandwidth occupation.

During traffic analysis and optimisation processes having as target the bandwidth optimisation, it becomes evident that the local node traffic (node bandwidth) shall never be enough information to support such goal. Considering that all spans in a ring could be used, the bandwidth usage would become minimised. For the remaining of the document the traffic associated with a span when all spans are being used shall be identified as:

$Ts_{(n-1,n)} \rightarrow$ Traffic in span $s_{(n-1,n)}$ using all available spans

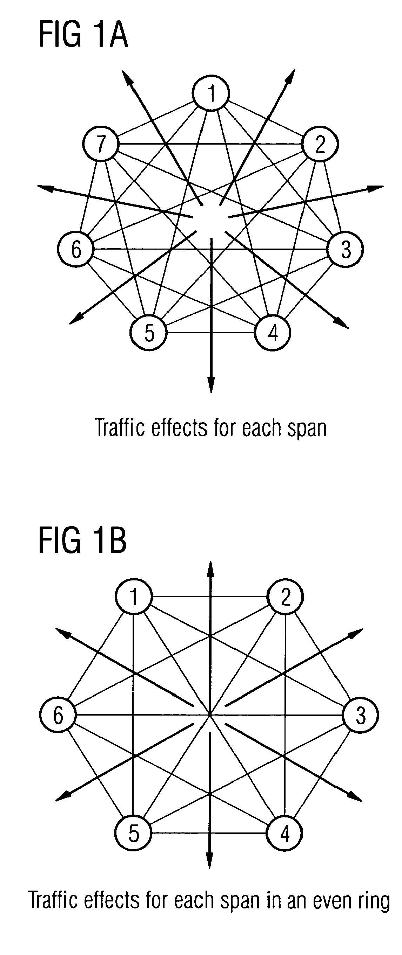

An example of such a network 100 is illustrated in Figure 1, wherein N nodes 102 are connected by spans, or links, 104. The bandwidth for network 102 will be equal to the sum of all traffic bandwidth that use the span as shortest path. Graphically, the minimal traffic bandwidth usage for each span, i.e., the effects for each span, is the sum of the bandwidth of communications that each arrow 106 crosses.

In a ring size N, even some of communications between different nodes will use N/2 spans (odd ring sizes do not verify such condition). It is indifferent to use one of two possible paths, so the minimum traffic bandwidth usage should not consider the bandwidth of those communications.

Figure 1a illustrates the case for the case where the number of nodes are odd. Figure 1b illustrates the case when the number of nodes is even. Since the main elements are the same in the figures, the reference numerals remain the same.

In equation format the traffic for each span, between nodes n and n-1, can be given as follows:
If the number of nodes $N$ is odd:

$$Ts_{(n-1,n)} = \sum_{k=n-\frac{N-1}{2}}^{n-1} \sum_{l=n}^{k+\frac{N-1}{2}} t_{(k,l)}$$

And if the number of nodes $N$ is even:

$$Ts_{(n-1,n)} = \sum_{k=n-\frac{N}{2}-1}^{n-1} \sum_{l=n}^{k+\frac{N}{2}-1} t_{(k,l)}$$

We can express the traffic for any type of network by putting both equations together:

$$Ts_{(n-1,n)} = \sum_{k=n-\frac{N-\frac{1+(-1)^N}{2}-1}{2}}^{n-1} \sum_{l=n}^{k+\frac{N-\frac{1+(-1)^N}{2}-1}{2}} t_{(k,l)}$$

The resulting value is the minimum usage needed for the span. In other words, it is guaranteed that a span bandwidth will be higher than this value.

The goal now is to know the effect of not using one span for traffic. The traffic of that span must follow the other spans. This affects not only the nodes adjacent to the span but all traffic that uses that span as the shortest path. Therefore, the traffic increment introduced in the ring when a span $s_{(n-1,n)}$ is not used is given as follows:
If the number of nodes $N$ is odd:

$$TIs_{(n-1,n)} = \sum_{k=n-\frac{N-1}{2}}^{n-1} \sum_{l=n}^{k+\frac{N-1}{2}} t_{(k,l)} \times N - 2(l-k)$$

And if the number of nodes $N$ is even:

$$TIs_{(n-1,n)} = \sum_{k=n-\frac{N}{2}-1}^{n-1} \sum_{l=n}^{k+\frac{N}{2}-1} t_{(k,l)} \times N - 2(l-k)$$

And putting both equations together as before in order to obtain the following:

$$TIs_{(n-1,n)} = \sum_{k=n-\frac{N-\frac{1+(-1)^N}{2}-1}{2}}^{n-1} \sum_{l=n}^{k+\frac{N-\frac{1+(-1)^N}{2}-1}{2}} t_{(k,l)} \times N - 2(l-k)$$

So total bandwidth usage in a ring when the span $s_{(n-1,n)}$ is blocked, or idle, is given by:
If $N$ is odd:

$$TRs_{(n-1,n)} = \sum_{k=1}^{N} Ts_{(k-1,k)} + TIs_{(n-1,n)}$$

And if $N$ is even:

$$TRs_{(n-1,n)} = \sum_{k=1}^{N} Ts_{(k-1,k)} + TIs_{(n-1,n)} + \frac{N}{2} \times \sum_{k=1}^{N/2-1} t_{(k,k+N/2)}$$

And putting both equations together:

$$TRs_{(n-1,n)} = \sum_{k=1}^{N} Ts_{(k-1,k)} + TIs_{(n-1,n)} + \frac{N \times (1+(-1)^N)}{2} \times \sum_{k=1}^{N/2-1} t_{(k,k+N/2)} \quad (1)$$

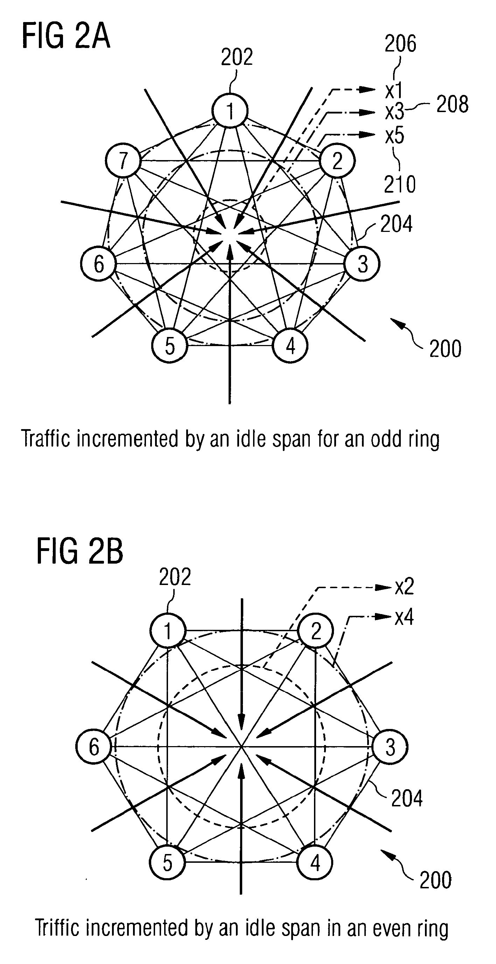

The resulting span bandwidth owing to an idle span may be illustrated by Figures 2a and 2b, which illustrate the odd and even node N cases, respectively. In a network 200, nodes N 202 are connected by links, or spans, 204.

As illustrated in Figure 2a, an hatched-rings 206, 208 and 210 represent the number of spans needed when communicating between two nodes. For example, those spans falling within the inner-hatched ring 206, such as the span between nodes 2 and 5, require one span. If the path of communication is now changed to go through node 7, we see that the spans are within the middle-hatched ring. As the figure indicates, those communications in the middle ring, require 3 additional spans. In other words, an additional 3 spans are now needed to communicate between nodes 2 and 5. For the outer ring, the number of additional spans needed is 5. Similarly, Figure 2b illustrates the case for an even ring, wherein the additional spans needed are 2 for the inner ring and 4 for the outer ring.

The above equations are used in the present invention to calculate the optimal protecting span that minimises the bandwidth utilization in the ring. This is done here by applying the expression (1) for each Span and selecting the one that yields the lowest value.

Another important issue is to know what the impacts of failures or changes in the configuration are on the other spans in the ring. We now turn to resolving the problem of Full Resilience Confirmation. That is, ensuring that the impact on the bandwidth of any other span does not cause that span to be overloaded. When a span is not used it introduces traffic to others spans in the ring. The traffic existing in a span $s_{(j-1,j)}$ due to a failure in a span $s_{(i-1,i)}$ is given as:

$$Ts_{(j-1,j)}Fs_{(i-1,i)} = \sum_{k=i}^{j-1}\sum_{l=j}^{i-1} t_{(k,l)} \quad (2)$$

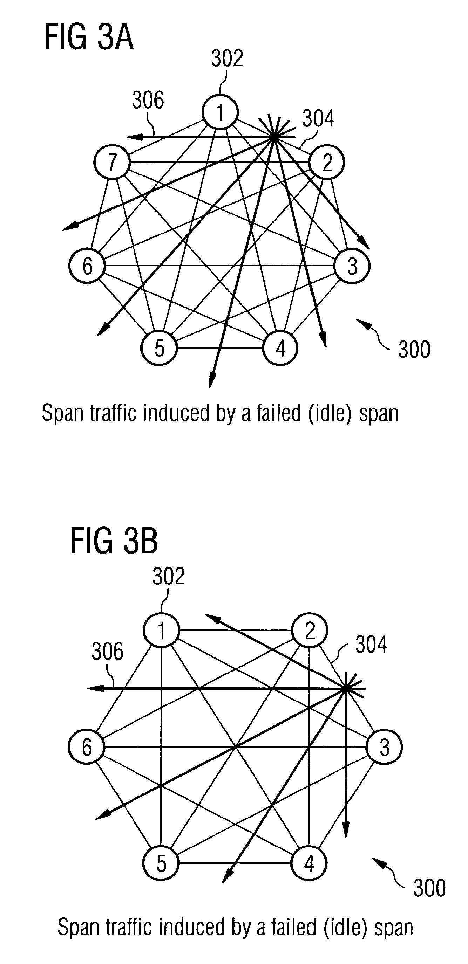

Graphically, this can be represented in Figures 3a and 3b which illustrate N nodes 302 connected by spans, or links, 304 for odd and even rings 300, respectively. Equation 2 is illustrated as the sum of the traffic that crosses an arrow 306 which connects the span with the failure and the span that is desired to know the bandwidth.

If there is a need for resilience in the ring, it should be provisioned for the worst case, that is ,a maximum bandwidth in case of a failure.

Another interesting finding is that the bandwidth in a certain span when another span is not used is exactly the same when configuration inverts their roles (independently of the traffic flow matrix), that is:

$$Ts_{(j-1,j)}Fs_{(i-1,i)} = Ts_{(i-1,i)}Fs_{(j-1,j)}$$

Thus, only half of the calculations are needed to know the required span bandwidth, or in another way:

$$\binom{N}{2} = C_2^N = \frac{N!}{(N-2)! \times 2!}$$

The importance of such a type of network analysis is apparent when trying to provision for the possibility of assuring full services resilience within the ring. In the same perspective, determining if a particular span copes with the traffic demand for resilience can also be considered in the same way.

To confirm if the ring infrastructure is full resilient the following methodology may be applied. The methodology is iterated for all spans. Next, for each span, the methodology is iterated from the span being used in the iteration to the last span. In each iteration, expression (2) is calculated and the result is stored if the result is greater than any previous one. Then, it is confirmed that the existing ring infrastructure can accommodate, for each span, the maximum value obtained in the last step.

Now, it is desired to minimise the maximum span bandwidth. Until now, the focus on optimisation was made considering that the goal was to minimise the sum of the bandwidth required in each span. Due to maximum span bandwidth capability, it is sometimes more important to minimise the bandwidth required in a span rather than the overall bandwidth in the ring. This situation may arise, for example, due to interface capability constraints. To continue, in order to find the protecting span that minimises the maximum value in any other span, the following methodology should be applied. Again, the process is iterated for all spans. For each span, iterate from the span being used in the previous step to the last span. In each span in the instant iteration, expression (2) is calculated and the result is stored if the value is greater than any previous one. Then, that span is chosen as the protecting span that minimises the maximum value obtained in the previous step.

Thus far, three optimization techniques have been described. Each of these techniques may be used separately or in any combination or permutation. It shall be appreciated from the above that bandwidth usage optimisation in the ring allows the telecom operator to assure best usage and return on investment from its main resource while improving the quality of service that is being offered. Knowing the effect of failures and consequent network behaviour provides the telecom operator the ability to earlier ascertain such events as well as earlier decide how to overcome them. Methodically employing the invention provides a proactive maintenance that avoids the foregoing problems of overloading a ring network. Such a capability is especially significant to assure a quality of service to clients and accomplish and agreed upon service level agreements. This translates into avoidance of profit erosion from SLA penalties.

The present invention shall now be discussed in terms of employing the above optimization techniques in order to configure a network. The effects of configuration changes give the ability to earlier prepare the required reconfigurations of the equipments or even accurately forecast necessary investments to support new traffic demand. This knowledge becomes especially useful when operators face traffic profiles that vary significantly according to different time schedules, for example, different configurations according to the hours of the day.

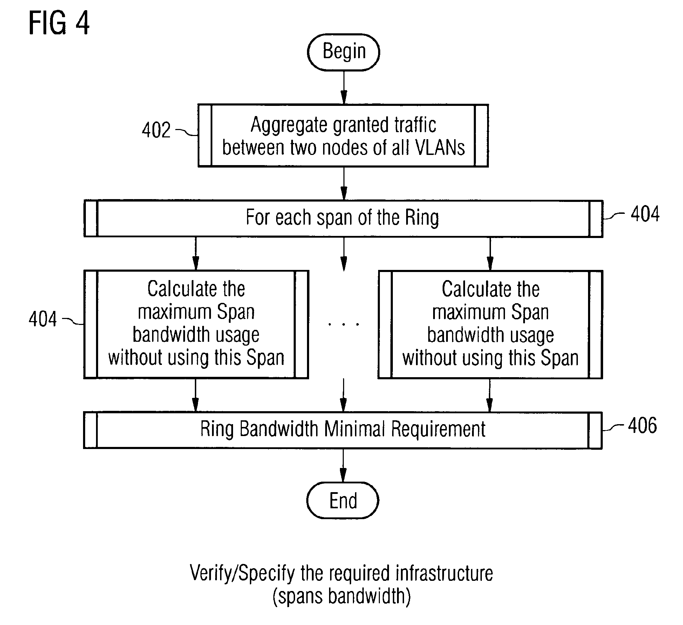

In one configuration optimization, the required infrastructure is verified to assure full ring resilience committed to the several domains specific requests. Consider the situation where there are several VLANs, each one with specific requests for Bandwidth. The configuration process is shown in Figure 4. In a first step 402, the granted traffic between nodes for all VLANs is aggregated, in other words summed. For each span of the Ring, the next step 404 is to calculate the maximum Span bandwidth usage without using this Span using expressions (1) and (2) from above. The ring Bandwidth Minimal Requirement is the value for all spans as illustrated in step 406.

It shall be appreciated that the invention has application in the real world. For example, ERP does not necessarily have a uniform bandwidth all over the ring. Each span may have a different bandwidth. This probably may be achieved by selectively setting the Committed Information Rate (CIR) for each VLAN or Peak Information Rate (PIR). For example, this may be achieved according to operator's choice and SLA agreements between the operator and provider. In another aspect of the invention, this may be used as a kind of Connection Admission Control (CAC) to decide whether another VLAN should be added to the ring or not. In any event, the invention would be very useful in these networks.

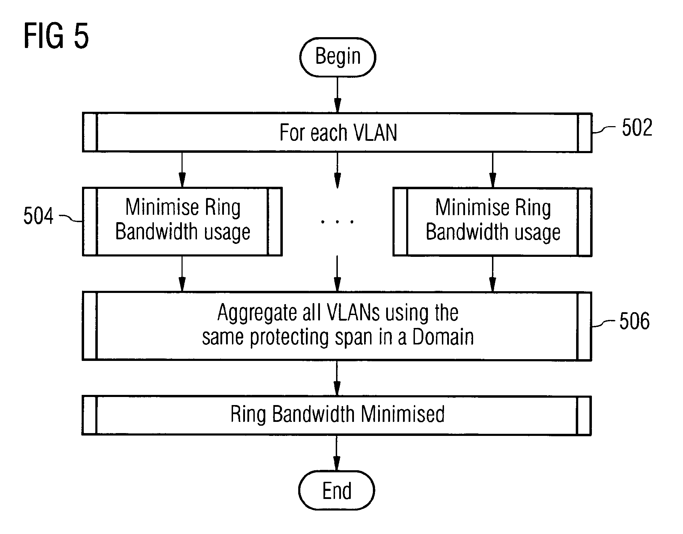

Turning now to a second configuration optimization, we desire now to determine how domains should be set accomplishing lowest ring overall bandwidth usage as possible. With reference to Figure 5, the first step 502 treats all VLANs as being separated and not aggregated in domains as before. These Domains are used inside a Ring and not have any influence in traffic separation. In step 504, we minimise Ring Bandwidth usage for each VLAN according to the expressions (1) and (2). Thereafter, we aggregate all VLANs in step 506 using the same protecting span in a given Domain. The ring bandwidth is by this way minimised.

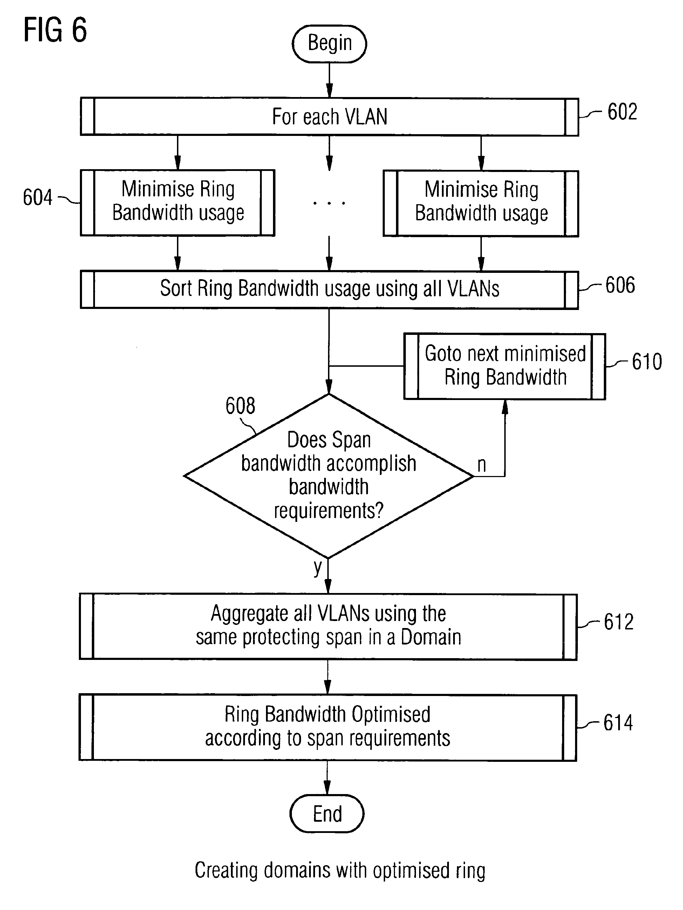

Now, we turn to the third configuration optimization technique of the present invention, wherein it is desired to creating domains with minimal ring bandwidth. In other words, we determine how domains should be set in order to accomplish bandwidth requirements for each span. With reference to Figure 6, we again begin by treating (step 602) each individual VLAN. For each VLAN, we minimise ring bandwidth usage in step 604. Thus far, the third configuration is similar to the process in Figure 5. In the third process, in step 606, the configurations are then sorted by ring bandwidth usage using all VLANs. If this configuration does not accomplish span bandwidth requirements, as tested in step 608, then the process flow proceeds to the next minimised configuration (step 610) and step 608 is repeated, thereby, continue the searching for the span that accomplishes the minimum bandwidth requirements. When a solution is finally found, the process flow then proceeds to step 612 to look for another solution. In step 612, the process aggregates all VLANs using the same protecting span in a Domain. This configures ring bandwidth optimised according to span requirements as indicated in step 614.

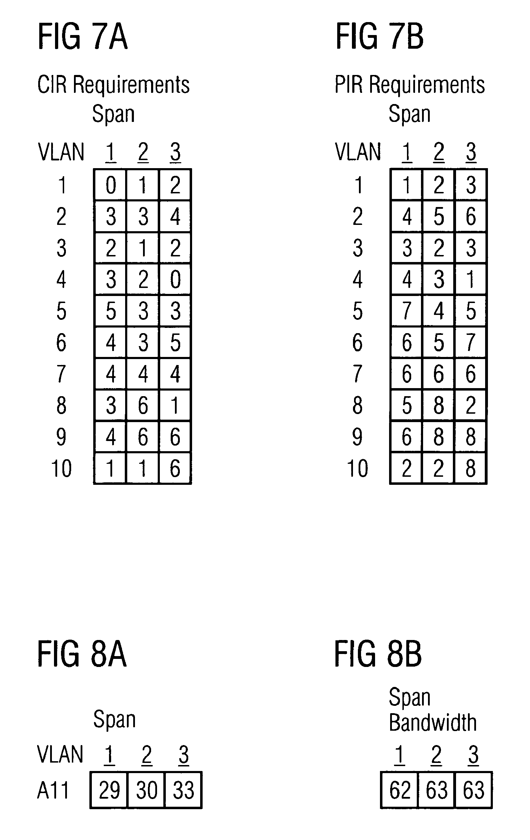

Now turning to three concrete examples, we consider the three configuration optimizations above in turn. Consider a simplified example comprised of a ring with 3 Nodes (A, B, and C) and spans (_1_, _2,_ and _3_). In the example, there are 10 VLANs and the following bandwidth requirements (values are in Mbit/s). It is assumed for this example that there are two requirements CIR and PIR, and that it is mandatory that CIR requirements are accomplished even if a link fails and the ring has enough bandwidth to assure PIR requirements when all links spans are operational. The CIR and PIR requirements for this example are shown in Figures 7a and 7b, respectively. Of course, these requirements may be other than those shown.

The first configuration optimization, i.e., verifying the required infrastructure to assure full ring resilience committed to the several domains specific requests, is now considered. To find the required infrastructure, we first aggregate all spans bandwidths as shown in Figure 8a. Then the maximum span bandwidth usage without using each span is calculated as explained above with reference to Figure 4. As will be seen, the increment in the ring for not using span 1 in Fig. 8a is 29 Mb.

As we see from Figure Fig. 8b, the required bandwidth for each span in order to meet the CIR requirements are 62, 63 and 63 Mbits for each of the spans 1, 2 and 3, respectively. In this example, it is seen that Span 1 should be reserved as the idle span since it has been calculated that the maximum bandwidth without using this span is 62 Mbits, which is 1 Mbit less than using the other spans 2 or 3 as the idle span.

Now, we turn to the second configuration optimization example. In this case, it is desired to determine how the domains should be set accomplishing lowest ring overall bandwidth usage as possible.

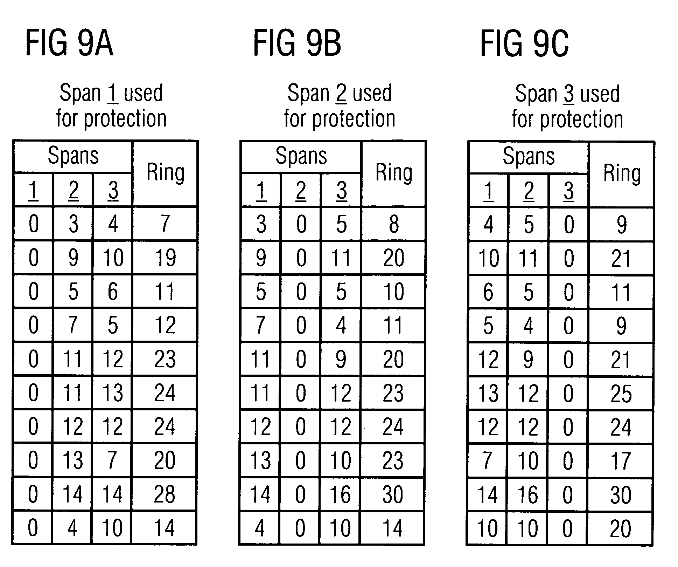

The process shown in Figure 5 is executed, yielding the tables in Figures 9a-c. Each table corresponds to each span 1, 2 or 3 maintained idle, respectively. The traffic for each VLAN 1-10 is indicated for each of the remaining spans. For example, in Figure 9a, the first span 1 is idle and, therefore, no traffic is indicated in the first column corresponding to span 1 for any of the VLANS. The remaining spans 2 and 3 carry traffic for the VLANS 1-10 as shown in the second and third columns. The total bandwidth needed for each VLAN is aggregated and indicated in the last column.

From the tables, it can be seen that VLAN 7 has the same bandwidth increment to the ring independent of which span is used for protection. Similarly, VLAN 10 has the same bandwidth increment to the ring independently if span _1_ or span _2_ are used for protection. The results for VLANs 7 and 10, as will be explained, can be used to simplify the configuration solution. Of course, these results will be different in other scenarios.

The invention then selects domains, or groups of VLANS and corresponding configurations that minimize the bandwidth for the ring. In the example given, there are actually six different configurations that minimise the ring bandwidth. These combinations of the VLANs are extrapolated according to the following observations of the tables in Figures 9a-c. The configurations are determined by totalling the bandwidth for the remaining spans for each VLAN and comparing which protection scheme offers the smallest bandwidth requirement. As can be observed, for example, the total ring bandwidth need for VLAN 1 is smallest in the first protection scheme, i.e., where span 1 is used for protection. Using a similar process, it is determined from this example that VLANs can be grouped into the various protection schemes into Domains. Therefore, in a Domain 1 - Using Span _**1**_ for protection - VLANs 1,2 and 9 are selected. A Domain 2 - Using Span _**2**_ for protection - selects VLANs 3,5 and 6. Domain 3 - Using Span _**3**_ for protection - selects VLANs 4 and 8. VLAN 7 may belong to any domain. VLAN 10 shall belong to Domain 1 or to Domain 2.

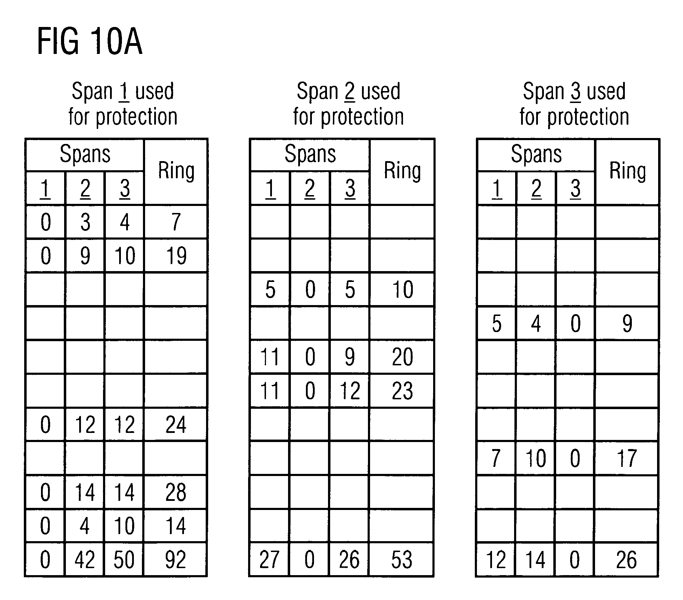

There are six configurations because VLAN 10 can be in either Domain 1 or 2 and for each of these permutations VLAN 7 can be in any of the three, which by permutational arithmetic makes 6 combinations. The 6 configurations are shown in Figure 10a-f.

Consider case 1, a Domain 1 uses Span _**1**_ for protection and is assigned VLANs 1, 2, _**7**_, 9 and _**10**_. A second domain, Domain 2, uses Span _**2**_ for protection and is assigned VLANs 3,5 and 6. A Domain 3 uses Span _**3**_ for protection and is assigned VLANs 4 and 8. From Figure 10a, we see that Span 1 requires =27 + 12 =39 Mbits. Span 2 requires =42 + 14 =56 Mbits. Span 3 requires =50 + 26 =76 Mbits. Thus, for any of the spans, Span 3 requires the Maximum =76 Mbits. The total ring bandwidth can be seen from figure 10a as = 92 + 53 + 26 = 171 Mbits.

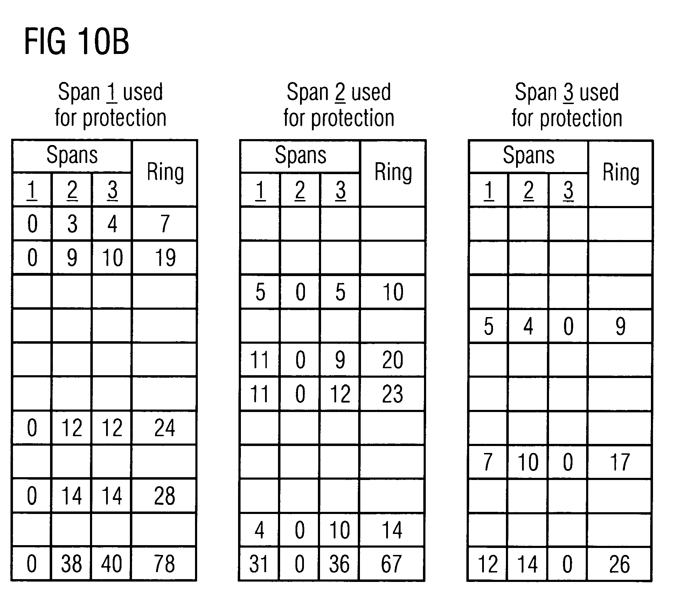

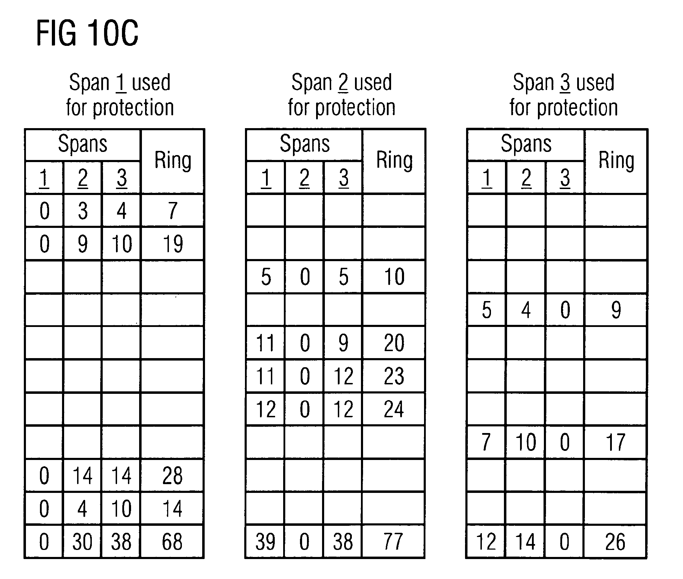

In case 2, Domain 1 uses Span 1 for protection and is assigned VLANs 1,2,7 and 9. Domain 2 uses Span 2 for protection and is assigned VLANs 3,5,6 and 10. Domain 3 uses Span 3 for protection and is assigned VLANs 4 and 8. We see from Figure 10b, that Span 1 requires =31 + 12 =43Mbits. Span 2 requires =38 + 14 =52Mbits. Span 3 requires =40 + 36 =76Mbits. Thus, the maximum span bandwidth is =76Mbits for Span 3. The total ring bandwidth = 78 + 67 + 26 = 171Mbits.

Considering case 3 were Domain 1 uses Span 1 for protection and is assigned VLANs 1,2,9 and 10. Domain 2 uses Span 2 for protection and is assigned VLANs 3,5,6 and 7. Domain 3 uses Span 3 for protection and is assigned VLANs 4 and 8. As seen from Figure 10c, Span 1 requires =39 + 12 =51Mbits. Span 2 requires =30 + 14 =44Mbits. Span 3 requires =38 + 38 =76Mbits. Thus, the maximum span bandwidth is =76Mbits for Span 3. The total ring bandwidth = 68 + 77 + 26 = 171Mbits.

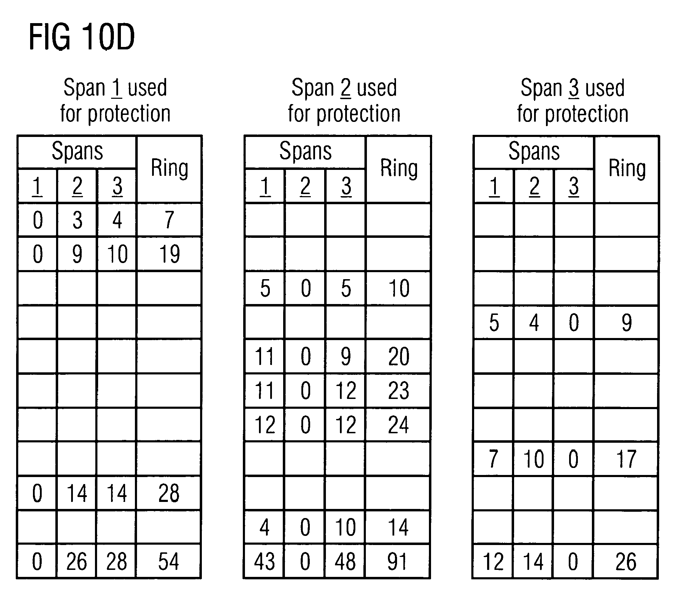

In consideration of case 4, Domain 1 uses Span 1 for protection and is assigned VLANs 1,2 and 9. Domain 2 uses Span 2 for protection and is assigned VLANs 3,5,6,7 and 10. Domain 3 uses Span 3 for protection and is assigned VLANs 4 and 8. We see from Figure 10d that Span 1 requires =43 + 12 =55, Span 2 requires =26 + 14 =40Mbits and Span 3 requires =28 + 48 =76Mbits. Again, we see that the maximum span bandwidth is =76Mbits. The total ring bandwidth is= 54 + 91 + 26 = 171Mbits.

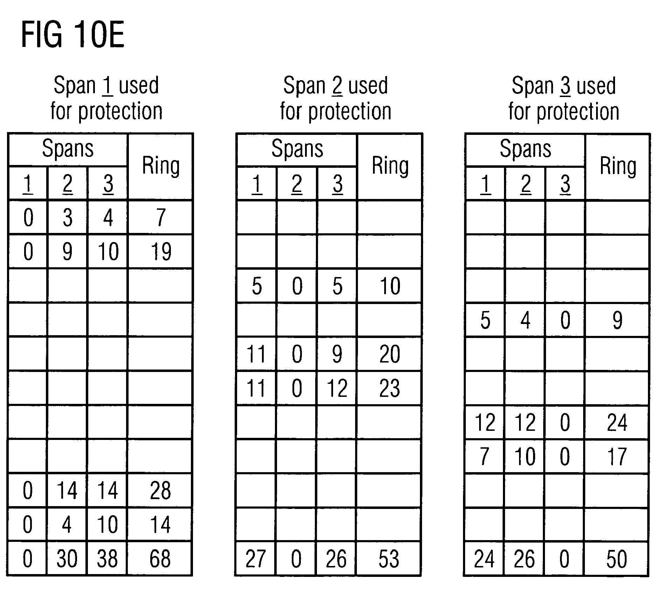

Considering case 5, Domain 1 uses Span 1 for protection and is assigned VLANs 1,2,9 and 10. Domain 2 uses Span 2 for protection and is assigned VLANs 3,5 and 6. Domain 3 uses Span 3 for protection and is assigned VLANs 4,7 and 8. We see from Figure 10e that Span 1 requires =27 + 24 =51Mbits. Span 2 requires =30 + 26 =56Mbits. Span 3 requires =38 + 26 =64Mbits. Here, we see that that maximum span bandwidth is from Span 3 =64Mbits. The total ring bandwidth = 68 + 53 + 50 = 171Mbits.

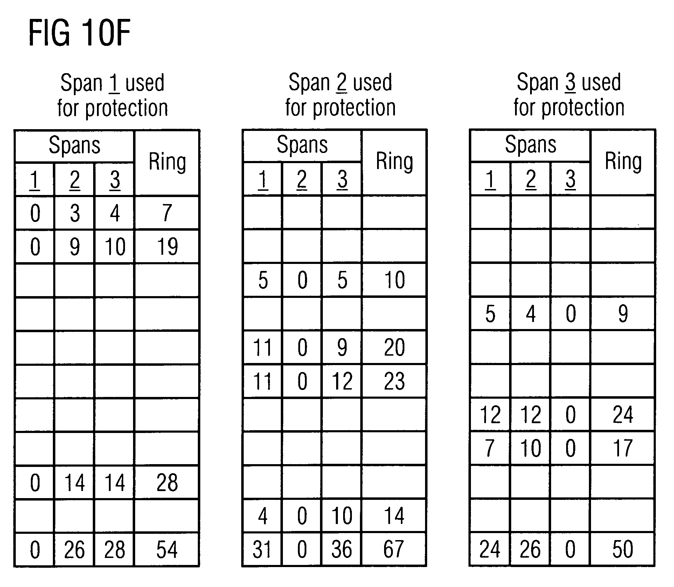

Considering the final case 6, Domain 1 uses Span 1 for protection and is assigned VLANs 1,2 and 9. Domain 2 uses Span 2 for protection and is assigned VLANs 3,5,6 and 10. Domain 3 uses Span 3 for protection and is assigned VLANs 4,7 and 8. We see from Figure 10f that Span 1 =31 + 24 =55Mbits, Span 2 requires =26 + 26 =52Mbits and Span 3 requires =28 + 36 =64Mbits. Thus, as in the last case, the maximum span bandwidth is required by Span 3 =64Mbits. The total ring bandwidth = 54 + 67 + 50 = 171Mbits.

It shall be noticed that all of the configurations 1-6 yield a total ring bandwidth of 171Mbits. Thus, according to the methodology of Figure 5, any of the configurations are acceptable.

Now, it will be determined how the domains should be set accomplishing bandwidth requirements for each span.However, in regard to the methodology given in Figure 6, the effect on the individual spans of the above configurations are considered. From the above, it can be seen that the minimum span bandwidth, 64Mbits for Span 3, can be attained from configurations 5 or 6. This may be an acceptable span bandwidth. However, consider the situation above where it was determined in Figure 8b that the maximum span bandwidth for the Spans are 62, 63 and 63 Mbits for the Spans 1, 2 and 3, respectively. Considering that the minimum bandwidth in configurations 5 and 6 for Span 3 is 64 Mbits, it is clear that configurations 5 and 6 have a negative impact on Span 3. In other words, configurations 5 and 6, while satisfying total ring bandwidth requirements, do not meet the requirement for at least one of the span bandwidths, here Span 3.

The third process shown in Figure 6 considers this situation. To resolve the conflict between overall bandwidth and the effect of the configuration on the individual spans, the invention adjusts the configurations and strikes a balance between the overall bandwidth needs and the impact on the spans. More particularly, the invention seeks to reconfigure the domains in order to meet the span bandwidth requirements whilst finding the least increment to the overall ring bandwidth.

Observing the span bandwidth requirements in the specific example above, it is required at least 64 Mbit/s (if VLAN 7 belongs to Domain 3). Considering that the available bandwidth is 62 Mbit/s for span _**1**_ and 63 Mbit/s for spans

*2* and *3* the solutions found for minimise the bandwidth usage are of no use. Next configuration (sorted by ring bandwidth usage) if found by exchanging a protection span for one VLAN. It should be select the exchange that brings the least ring bandwidth increment or increase.

In the example here, the invention finds the increment from the above configurations as being achieved by one of the following exchanges:

- VLAN 1 - Using Span *2* for protection instead of Span *1;*

- VLAN 2 - Using Span *2* for protection instead of Span *1;*

- VLAN 3 - Using Span *1* for protection instead of Span 2;

- VLAN 4 - Using Span *3* for protection instead of Span 2;

- VLAN 5 - Using Span *3* for protection instead of Span *2;*

- VLAN 6 - Using Span *1* for protection instead of Span *2*;

In regard to the process in Figure 6, the increment calculation is performed in step 606. The invention then checks whether the exchange fulfils the minimum span bandwidth requirements in step 608. The invention, checks this for all remaining configurations, namely the 6 configurations in the example that arise due to the permutations of VLANs 7 and 10. If the minimum bandwidth for the spans is not met (step 610), the next exchange above is examined and the process in step 608 is repeated. After a few iterations, depending on the sorting mechanism, a solution will be found.

In the particular example here, the best solution is to use the following configuration.

- Domain 1 - Using Span *1* for protection - VLANs 1, 2 and 9;

- Domain 2 - Using Span *2* for protection - VLANs 5, 6 and 10;

- Domain 3 - Using Span *3* for protection - VLANs 3, 4, 7 and 8.

It should be noticed in the above example that there was an optimal configuration that minimises the ring bandwidth according to each span available bandwidth. In the case that bandwidth requirements were too low (below 59 Mbit/s in this example) a solution will not be found. However, an optimal solution would be found that best fits the bandwidth requirements. In this sense, the invention provides at least a best solution for all cases.

It shall be appreciated that the present invention has been described with reference to specific examples, but that the invention may be practiced with modifications that are within the spirit and scope of the invention.

## Claims

1. A method of reconfiguring a ring network having N nodes and S spans that prevents a maximum usage parameter to be exceeded, the method comprising the steps of:

   configuring the network by selecting a span as a protection span to remain idle,
   calculating an effect of the configuration on the network that causes the network to exceed a maximum usage parameter, and
   reconfiguring the network by selecting a different span as a protection span to remain idle based on a result of the step of calculating that a previous span selected as the protection span to remain idle causes the network to exceed a maximum usage parameter such that the maximum usage parameter of the reconfigured network is not exceeded.

2. The method of claim 1, wherein the step of calculating is based on minimizing an overall BW using the selected span.

3. The method of claim 2, wherein the step of calculating the effect using the following equation:

$$TRs_{(n-1,n)} = \sum_{k=1}^{N} Ts_{(k-1,k)} + TIs_{(n-1,n)} + \frac{N \times \left(1 + (-1)^N\right)}{2} \times \sum_{k=1}^{N/2-1} t_{(k,k+N/2)}$$

**4.** The method of claim 2, further comprising the steps of:

calculating for a number n of VLANs the bandwidth for the ring for each span selected as the idle span, and determining domains comprising a particular span as the idle span for those VLANs that result in a minimum ring bandwidth calculated,
wherein at least 1 VLAN may belong to more than one domain, selecting for the at least 1 VLAN a domain such that a maximum span bandwidth for each span is satisfied.

**5.** The method according to claim 5, further comprising the step of selecting for the at least 1 VLAN the domain that results in an increment of the ring bandwidth.

**6.** The method of claim 1, wherein the step of calculating is based on an impact on other spans using the selected span.

**7.** The method of claim 6, wherein the step of calculating the effect using the following equation:

$$Ts_{(j-1,j)}Fs_{(i-1,i)} = \sum_{k=i}^{j-1} \sum_{l=j}^{i-1} t_{(k,l)}$$

**8.** The method of claim 1, wherein the step of calculating is based on a max span BW using the selected span.

**9.** A ring network reconfigured to prevent a maximum usage parameter to be exceeded according to the process steps of claim 1.

## FIG 1A

Traffic effects for each span

## FIG 1B

Traffic effects for each span in an even ring

# FIG 2A

Traffic incremented by an idle span for an odd ring

# FIG 2B

Triffic incremented by an idle span in an even ring

## FIG 3A

Span traffic induced by a failed (idle) span

## FIG 3B

Span traffic induced by a failed (idle) span

**FIG 4**

Verify/Specify the required infrastructure
(spans bandwidth)

# FIG 5

```
                          ( Begin )
                              │
                              ▼
┌──┬────────────────────────────────────────────────┬──┐
│  │                  For each VLAN                   │  │── 502
└──┴────────────────────────────────────────────────┴──┘
        │                    │                   │
        ▼                    ▼                   ▼
┌──┬──────────────┬──┐              ┌──┬──────────────┬──┐
│  │ Minimise Ring │  │    . . .     │  │ Minimise Ring │  │
│  │Bandwidth usage│  │              │  │Bandwidth usage│  │
└──┴──────────────┴──┘              └──┴──────────────┴──┘
   504                                      
        │                    │                   │
        ▼                    ▼                   ▼
┌──┬────────────────────────────────────────────────┬──┐
│  │            Aggregate all VLANs using the         │  │── 506
│  │          same protecting span in a Domain        │  │
└──┴────────────────────────────────────────────────┴──┘
                              │
                              ▼
┌──┬────────────────────────────────────────────────┬──┐
│  │             Ring Bandwidth Minimised             │  │
└──┴────────────────────────────────────────────────┴──┘
                              │
                              ▼
                          (  End  )
```

# FIG 6

Begin

| For each VLAN | — 602 |

604 —

| Minimise Ring Bandwidth usage | . . . | Minimise Ring Bandwidth usage |

| Sort Ring Bandwidth usage using all VLANs | — 606 |

| Goto next minimised Ring Bandwidth | — 610 |

608

Does Span bandwidth accomplish bandwidth requirements?

n

y

| Aggregate all VLANs using the same protecting span in a Domain | — 612 |

| Ring Bandwidth Optimised according to span requirements | — 614 |

End

Creating domains with optimised ring

# FIG 7A

CIR Requirements
Span

| VLAN | 1 | 2 | 3 |
|------|---|---|---|
| 1 | 0 | 1 | 2 |
| 2 | 3 | 3 | 4 |
| 3 | 2 | 1 | 2 |
| 4 | 3 | 2 | 0 |
| 5 | 5 | 3 | 3 |
| 6 | 4 | 3 | 5 |
| 7 | 4 | 4 | 4 |
| 8 | 3 | 6 | 1 |
| 9 | 4 | 6 | 6 |
| 10 | 1 | 1 | 6 |

# FIG 7B

PIR Requirements
Span

| VLAN | 1 | 2 | 3 |
|------|---|---|---|
| 1 | 1 | 2 | 3 |
| 2 | 4 | 5 | 6 |
| 3 | 3 | 2 | 3 |
| 4 | 4 | 3 | 1 |
| 5 | 7 | 4 | 5 |
| 6 | 6 | 5 | 7 |
| 7 | 6 | 6 | 6 |
| 8 | 5 | 8 | 2 |
| 9 | 6 | 8 | 8 |
| 10 | 2 | 2 | 8 |

# FIG 8A

Span

| VLAN | 1 | 2 | 3 |
|------|----|----|----|
| A11 | 29 | 30 | 33 |

# FIG 8B

Span
Bandwidth

| 1 | 2 | 3 |
|----|----|----|
| 62 | 63 | 63 |

# FIG 9A

Span 1 used
for protection

| Spans | | | Ring |
|---|---|---|---|
| 1 | 2 | 3 | |
| 0 | 3 | 4 | 7 |
| 0 | 9 | 10 | 19 |
| 0 | 5 | 6 | 11 |
| 0 | 7 | 5 | 12 |
| 0 | 11 | 12 | 23 |
| 0 | 11 | 13 | 24 |
| 0 | 12 | 12 | 24 |
| 0 | 13 | 7 | 20 |
| 0 | 14 | 14 | 28 |
| 0 | 4 | 10 | 14 |

# FIG 9B

Span 2 used
for protection

| Spans | | | Ring |
|---|---|---|---|
| 1 | 2 | 3 | |
| 3 | 0 | 5 | 8 |
| 9 | 0 | 11 | 20 |
| 5 | 0 | 5 | 10 |
| 7 | 0 | 4 | 11 |
| 11 | 0 | 9 | 20 |
| 11 | 0 | 12 | 23 |
| 12 | 0 | 12 | 24 |
| 13 | 0 | 10 | 23 |
| 14 | 0 | 16 | 30 |
| 4 | 0 | 10 | 14 |

# FIG 9C

Span 3 used
for protection

| Spans | | | Ring |
|---|---|---|---|
| 1 | 2 | 3 | |
| 4 | 5 | 0 | 9 |
| 10 | 11 | 0 | 21 |
| 6 | 5 | 0 | 11 |
| 5 | 4 | 0 | 9 |
| 12 | 9 | 0 | 21 |
| 13 | 12 | 0 | 25 |
| 12 | 12 | 0 | 24 |
| 7 | 10 | 0 | 17 |
| 14 | 16 | 0 | 30 |
| 10 | 10 | 0 | 20 |

# FIG 10A

### Span 1 used for protection

| Spans | | | Ring |
|:---:|:---:|:---:|:---:|
| 1 | 2 | 3 | |
| 0 | 3 | 4 | 7 |
| 0 | 9 | 10 | 19 |
| | | | |
| | | | |
| | | | |
| | | | |
| 0 | 12 | 12 | 24 |
| | | | |
| 0 | 14 | 14 | 28 |
| 0 | 4 | 10 | 14 |
| 0 | 42 | 50 | 92 |

### Span 2 used for protection

| Spans | | | Ring |
|:---:|:---:|:---:|:---:|
| 1 | 2 | 3 | |
| | | | |
| | | | |
| 5 | 0 | 5 | 10 |
| | | | |
| 11 | 0 | 9 | 20 |
| 11 | 0 | 12 | 23 |
| | | | |
| | | | |
| | | | |
| | | | |
| 27 | 0 | 26 | 53 |

### Span 3 used for protection

| Spans | | | Ring |
|:---:|:---:|:---:|:---:|
| 1 | 2 | 3 | |
| | | | |
| | | | |
| | | | |
| 5 | 4 | 0 | 9 |
| | | | |
| | | | |
| | | | |
| 7 | 10 | 0 | 17 |
| | | | |
| | | | |
| 12 | 14 | 0 | 26 |

# FIG 10B

### Span 1 used for protection

| Spans | | | Ring |
|---|---|---|---|
| 1 | 2 | 3 | |
| 0 | 3 | 4 | 7 |
| 0 | 9 | 10 | 19 |
| | | | |
| | | | |
| | | | |
| | | | |
| 0 | 12 | 12 | 24 |
| | | | |
| 0 | 14 | 14 | 28 |
| | | | |
| 0 | 38 | 40 | 78 |

### Span 2 used for protection

| Spans | | | Ring |
|---|---|---|---|
| 1 | 2 | 3 | |
| | | | |
| | | | |
| 5 | 0 | 5 | 10 |
| | | | |
| 11 | 0 | 9 | 20 |
| 11 | 0 | 12 | 23 |
| | | | |
| | | | |
| | | | |
| 4 | 0 | 10 | 14 |
| 31 | 0 | 36 | 67 |

### Span 3 used for protection

| Spans | | | Ring |
|---|---|---|---|
| 1 | 2 | 3 | |
| | | | |
| | | | |
| | | | |
| 5 | 4 | 0 | 9 |
| | | | |
| | | | |
| | | | |
| 7 | 10 | 0 | 17 |
| | | | |
| 12 | 14 | 0 | 26 |

# FIG 10C

**Span 1 used for protection**

| Spans | | | Ring |
|---|---|---|---|
| 1 | 2 | 3 | |
| 0 | 3 | 4 | 7 |
| 0 | 9 | 10 | 19 |
| | | | |
| | | | |
| | | | |
| | | | |
| | | | |
| | | | |
| 0 | 14 | 14 | 28 |
| 0 | 4 | 10 | 14 |
| 0 | 30 | 38 | 68 |

**Span 2 used for protection**

| Spans | | | Ring |
|---|---|---|---|
| 1 | 2 | 3 | |
| | | | |
| | | | |
| 5 | 0 | 5 | 10 |
| | | | |
| 11 | 0 | 9 | 20 |
| 11 | 0 | 12 | 23 |
| 12 | 0 | 12 | 24 |
| | | | |
| | | | |
| 39 | 0 | 38 | 77 |

**Span 3 used for protection**

| Spans | | | Ring |
|---|---|---|---|
| 1 | 2 | 3 | |
| | | | |
| | | | |
| | | | |
| 5 | 4 | 0 | 9 |
| | | | |
| | | | |
| | | | |
| 7 | 10 | 0 | 17 |
| | | | |
| 12 | 14 | 0 | 26 |

# FIG 10D

### Span 1 used for protection

| Spans | | | Ring |
|---|---|---|---|
| 1 | 2 | 3 | |
| 0 | 3 | 4 | 7 |
| 0 | 9 | 10 | 19 |
| | | | |
| | | | |
| | | | |
| | | | |
| | | | |
| | | | |
| 0 | 14 | 14 | 28 |
| | | | |
| 0 | 26 | 28 | 54 |

### Span 2 used for protection

| Spans | | | Ring |
|---|---|---|---|
| 1 | 2 | 3 | |
| | | | |
| | | | |
| 5 | 0 | 5 | 10 |
| | | | |
| 11 | 0 | 9 | 20 |
| 11 | 0 | 12 | 23 |
| 12 | 0 | 12 | 24 |
| | | | |
| | | | |
| 4 | 0 | 10 | 14 |
| 43 | 0 | 48 | 91 |

### Span 3 used for protection

| Spans | | | Ring |
|---|---|---|---|
| 1 | 2 | 3 | |
| | | | |
| | | | |
| | | | |
| 5 | 4 | 0 | 9 |
| | | | |
| | | | |
| | | | |
| 7 | 10 | 0 | 17 |
| | | | |
| | | | |
| 12 | 14 | 0 | 26 |

# FIG 10E

### Span 1 used for protection

| Spans | | | Ring |
|---|---|---|---|
| 1 | 2 | 3 | |
| 0 | 3 | 4 | 7 |
| 0 | 9 | 10 | 19 |
| | | | |
| | | | |
| | | | |
| | | | |
| | | | |
| | | | |
| 0 | 14 | 14 | 28 |
| 0 | 4 | 10 | 14 |
| 0 | 30 | 38 | 68 |

### Span 2 used for protection

| Spans | | | Ring |
|---|---|---|---|
| 1 | 2 | 3 | |
| | | | |
| | | | |
| 5 | 0 | 5 | 10 |
| | | | |
| 11 | 0 | 9 | 20 |
| 11 | 0 | 12 | 23 |
| | | | |
| | | | |
| | | | |
| | | | |
| 27 | 0 | 26 | 53 |

### Span 3 used for protection

| Spans | | | Ring |
|---|---|---|---|
| 1 | 2 | 3 | |
| | | | |
| | | | |
| | | | |
| 5 | 4 | 0 | 9 |
| | | | |
| | | | |
| 12 | 12 | 0 | 24 |
| 7 | 10 | 0 | 17 |
| | | | |
| | | | |
| 24 | 26 | 0 | 50 |

# FIG 10F

### Span 1 used for protection

| Spans | | | Ring |
|---|---|---|---|
| 1 | 2 | 3 | |
| 0 | 3 | 4 | 7 |
| 0 | 9 | 10 | 19 |
| | | | |
| | | | |
| | | | |
| | | | |
| | | | |
| | | | |
| 0 | 14 | 14 | 28 |
| | | | |
| 0 | 26 | 28 | 54 |

### Span 2 used for protection

| Spans | | | Ring |
|---|---|---|---|
| 1 | 2 | 3 | |
| | | | |
| | | | |
| 5 | 0 | 5 | 10 |
| | | | |
| 11 | 0 | 9 | 20 |
| 11 | 0 | 12 | 23 |
| | | | |
| | | | |
| | | | |
| 4 | 0 | 10 | 14 |
| 31 | 0 | 36 | 67 |

### Span 3 used for protection

| Spans | | | Ring |
|---|---|---|---|
| 1 | 2 | 3 | |
| | | | |
| | | | |
| | | | |
| 5 | 4 | 0 | 9 |
| | | | |
| | | | |
| 12 | 12 | 0 | 24 |
| 7 | 10 | 0 | 17 |
| | | | |
| | | | |
| 24 | 26 | 0 | 50 |

**European Patent Office**

**EUROPEAN SEARCH REPORT**

Application Number

EP 05 01 5994

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HEYLIGHEN F, TURCHIN V: "The trial-and-error method" PRINCIPIA CYBERNETICA WEB, [Online] 6 August 1996 (1996-08-06), XP002350785 Retrieved from the Internet: URL:http://pespmc1.vub.ac.be/TRIALERR.html > [retrieved on 2005-10-24] * the whole document * | 1,9 | H04L12/437 |
| A | US 2003/229807 A1 (QIAO CHUNMING ET AL) 11 December 2003 (2003-12-11) * page 1, paragraph 4 - page 6, paragraph 74; figures 1,2 * | 1-9 | |
| A | US 2003/009582 A1 (QIAO CHUNMING ET AL) 9 January 2003 (2003-01-09) * page 5, paragraph 99 - page 6, paragraph 110 * | 1,9 | |
| A | EP 1 146 682 A (NORTEL NETWORKS LIMITED) 17 October 2001 (2001-10-17) * page 2, paragraph 2 - page 6, paragraph 49; figures 1-3 * * page 9, paragraph 81 - page 10, paragraph 103; figures 9-11 * | 1-9 | TECHNICAL FIELDS SEARCHED (Int.Cl.7) H04L |
| A | US 6 724 757 B1 (ZADIKIAN HAIG MICHAEL ET AL) 20 April 2004 (2004-04-20) * column 5, line 18 - column 8, line 9; figure 1B * | 1-9 | |

The present search report has been drawn up for all claims

| Place of search | Date of completion of the search | Examiner |
|---|---|---|
| Munich | 25 October 2005 | Erik Fischer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 01 5994

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2005

| Patent document cited in search report | | Publication date | Patent family member(s) | | Publication date |
|---|---|---|---|---|---|
| US 2003229807 | A1 | 11-12-2003 | NONE | | |
| US 2003009582 | A1 | 09-01-2003 | WO | 03003156 A2 | 09-01-2003 |
| EP 1146682 | A | 17-10-2001 | CA | 2339716 A1 | 29-09-2001 |
| US 6724757 | B1 | 20-04-2004 | AU | 2850300 A | 01-08-2000 |
| | | | WO | 0042811 A1 | 20-07-2000 |
| | | | US | 2004196838 A1 | 07-10-2004 |

## REFERENCES CITED IN THE DESCRIPTION

**Patent documents cited in the description**

- US 6430151 B1
- US 20030023706 A1
- US 6195332 B1